# EUROPEAN PATENT APPLICATION

(11) **EP 4 786 264 A1**
(43) Date of publication of application: **05.08.2026**
(21) Application number: 24870509.7
(22) Date of filing: 14.09.2024
(51) Int. Cl.: B60N 2/07

(54) **TRACK, TRACK STRUCTURE, SEAT ASSEMBLY AND VEHICLE**

(30) Priority: 28.09.2023 CN 202322692844 U
(71) Applicant: BYD Company Limited, Shenzhen, Guangdong 518118 (CN)
(72) Inventor: YANG, Liu, Shenzhen, Guangdong 518118 (CN); JIAO, Rongcheng, Shenzhen, Guangdong 518118 (CN); TIAN, Xiangyou, Shenzhen, Guangdong 518118 (CN); HOU, Yun, Shenzhen, Guangdong 518118 (CN); ZHANG, Xianbin, Shenzhen, Guangdong 518118 (CN)
(74) Representative: Mathys & Squire
(86) International application number: PCT/CN2024/119223
(87) International publication number: WO 2025/066965

(57) **Abstract**

A track, a track structure, a seat assembly and a vehicle. The track is adapted to be used as a first track of the track structure. An accommodating cavity with an opening is provided in the track. The track is further provided with a stopping surface, wherein the stopping surface is configured to stop a first rolling body of the track structure, and the first rolling body is a rolling body arranged in the accommodating cavity on the side close to the opening; and the stopping surface is configured to be capable of being in contact with the first rolling body, and is provided with at least a first point configured to be in contact with the first rolling body, the first point is adapted to be arranged on the side closer to the opening than a second point, the second point is the highest point of the first rolling body, and the height of the first point is adapted to be lower than the height of the second point.

## Description

### CROSS-REFERENCE TO RELATED APPLICATIONS

The present disclosure claims priority to Chinese Patent Application No. 202322692844.4, filed with the China National Intellectual Property Administration (CNIPA) on September 28, 2023, entitled " TRACK, TRACK STRUCTURE, SEAT ASSEMBLY AND VEHICLE ", which is incorporated herein by reference in its entirety.

### FIELD

The present disclosure relates to the technical field of vehicle components, and specifically, to a track, a track structure, a seat assembly and a vehicle.

### BACKGROUND

As a key component of a seat, an automotive seat track functions as a fixing device, an adjusting device and a locking device for an automotive seat. An automotive seat track generally includes an upper track, a lower track and rolling elements, wherein the lower track can be fixed on the cabin floor, the upper track is fixed on the bottom surface of the seat, and the upper track and the lower track are slidably connected via the rolling elements to realize the adjustment of the seat position. In the related art, the peel strength of the seat track is low and cannot meet design requirements.

### SUMMARY

The purpose of the present disclosure is to provide a track, a track structure, a seat assembly and a vehicle, so as to at least partially solve the technical problems existing in the

### related art.

To achieve the above purpose, according to a first aspect of the present disclosure, a track is provided. The track is adapted to serve as a first track of a track structure, and a cavity with an opening is arranged on the track;
the track is further provided with a stop surface, and the stop surface is configured to stop a first rolling element of the track structure, wherein the first rolling element is a rolling element arranged in the cavity and close to one side of the opening; and
the stop surface is configured to be capable of contacting the first rolling element, the stop surface having at least a first point for contacting the first rolling element, and the first point being adapted to be arranged on a side close to the opening relative to a second point;
wherein the second point is the highest point of the first rolling element, and the height of the first point is adapted to be lower than the height of the second point.

In an embodiment, the stop surface has a tangent line at the first point, and the height of the intersection point of the tangent line and the perpendicular line where the second point is located is higher than that of the first point.

In an embodiment, the stop surface is configured as an inclined plane, and the stop surface has a first end and a second end opposite to each other. In the width direction of the track, the second end is closer to the opening than the first end, and the second end is closer to the side of the cavity away from the opening than the first end.

Specifically, the angle α between the stop surface and the width direction of the track is 5° to 10°.

In an embodiment, the track further includes a first arc-shaped surface for contacting the first rolling element, and the shape of the first arc-shaped surface matches the shape of the first rolling element; the first arc-shaped surface is connected to an end of the stop surface away from the opening.

In an embodiment, the first arc-shaped surface is configured as a first circular arc-shaped surface.

In an embodiment, the track includes a first main body portion, a pair of first side wall portions and a pair of stop portions,
one ends of the pair of first side wall portions are respectively disposed at two ends of the first main body portion in the width direction of the track, and the pair of stop portions are connected to the other ends of the corresponding first side wall portions;
the first main body portion, the first side wall portions and the stop portions jointly define the cavity, and a gap between the pair of stop portions forms the opening;
wherein, the stop portion includes at least a first portion arranged in an inclined manner, a first end of the first portion being connected to the first side wall portion, and a second end of the first portion extending along a direction close to the first main body portion; and
the inner wall of the first portion is provided with the stop surface.

In an embodiment, a position where the first side wall portion is connected to the first portion is in smooth transition, so as to form the first arc-shaped surface adapted to contact the first rolling element.

In an embodiment, the stop portion further includes a second portion, and the second portion is connected to the second end of the first portion and extends close to the first main body portion in a direction perpendicular to the first main body portion.

In an embodiment, the track is further provided with a third arc-shaped surface adapted to contact a second rolling element in the track structure, the third arc-shaped surface is disposed on a side of the cavity away from the opening, and the third arc-shaped surface matches the shape of the second rolling element.

Specifically, the second rolling element is a rolling element disposed on a side of the cavity away from the opening.

In an embodiment, the track further includes at least one pair of first limiting portions, the at least one pair of first limiting portions includes a pair of first limiting portions disposed at two ends of the track in the length direction, and the first limiting portions are used for limiting the position of the second rolling element in the length direction of the track.

According to a second aspect of the present disclosure, a track structure is provided. The track structure includes the track as described above, and the track serves as a first track of the track structure;
a second track, at least part of the second track is slidably disposed at the cavity along the length direction of the track; and
the first rolling element, disposed between the track and the second track and disposed on a side of the cavity close to the opening.

In an embodiment, the track is provided with a first arc-shaped surface, and the shape of the first arc-shaped surface matches the shape of the first rolling element;
the second track is further provided with a second arc-shaped surface contacting the first rolling element, and the shape of the second arc-shaped surface matches the shape of the first rolling element; and
the first rolling element is clamped between the first arc-shaped surface and the second arc-shaped surface.

In an embodiment, both the first arc-shaped surface and the second arc-shaped surface are first circular arc-shaped surfaces.

In an embodiment, the first rolling element is a first ball, a radius of the first circular arc-shaped surface is R1, a radius of the first ball is R2, and R1 and R2 satisfy R1 ≥ 1.2R2.

In an embodiment, the track structure further includes a second rolling element, and the second rolling element is disposed on a side of the cavity away from the opening;
the track is further provided with a third arc-shaped surface;
the second track is further provided with a fourth arc-shaped surface; and
the second rolling element is clamped between the third arc-shaped surface and the fourth arc-shaped surface.

In an embodiment, both the third arc-shaped surface and the fourth arc-shaped surface are second circular arc-shaped surfaces, the first rolling element is a first ball, and the second rolling element is a second ball; and
a radius of the second ball is greater than a radius of the first ball.

In an embodiment, a radius of the second circular arc-shaped surface is R3, a radius of the second ball is R4, and R3 and R4 satisfy R3 ≥ 1.2R4.

In an embodiment, the second track further includes at least one pair of second limiting portions, the at least one pair of second limiting portions includes a pair of second limiting portions disposed at two ends of the second track in the length direction, and the second limiting portions are used for limiting the position of the first rolling element in the length direction of the second track.

According to a third aspect of the present disclosure, a seat assembly is provided, including a seat and the track structure as described above.

According to a fourth aspect of the present disclosure, a vehicle is provided, including the seat assembly as described above or the track structure as described above.

Through the above technical solution, the peel strength of the track structure can be directly improved by using the stop surface, and the peel strength of the track structure can be improved without using other reinforcing members. While improving the peel strength of the track structure, it is conducive to reducing the number of components in the track structure, simplifying the track structure, and effectively saving the production and manufacturing costs caused by the use of other reinforcing members.

Other features and advantages of the present disclosure will be described in detail in the subsequent detailed description of the embodiments.

### BRIEF DESCRIPTION OF THE DRAWINGS

FIG. 1 is a side view of a track structure provided by an exemplary embodiment of the present disclosure along a length direction of a first track or a second track, wherein a rolling element retainer is not shown.
FIG. 2 is a side view of a second track in the track structure provided by an exemplary embodiment of the present disclosure along a length direction of the second track itself, wherein a first rolling element and a second rolling element are shown, and the first rolling element and the second rolling element are indicated by dashed lines.
FIG. 3 is a side view of a first track in the track structure provided by an exemplary embodiment of the present disclosure along a length direction of the first track itself, wherein a first rolling element and a second rolling element are shown, and the first rolling element and the second rolling element are indicated by dashed lines.
FIG. 4 is a side view of a track structure provided by an exemplary embodiment of the present disclosure along a length direction of a first track or a second track, wherein a rolling element retainer is shown.
FIG. 5 is an enlarged view of portion A in Fig. 4.
FIG. 6 is a schematic structural block diagram of a seat assembly provided by an exemplary embodiment of the present disclosure.
FIG. 7 is a schematic structural block diagram of a vehicle provided by an exemplary embodiment of the present disclosure.

### DETAILED DESCRIPTION

The detailed embodiments of the present disclosure will be described in detail below with reference to the accompanying drawings. It will be understood that the detailed embodiments described herein are for illustrative and explanatory purposes of the present disclosure only, and are not intended to limit the present disclosure.

In the present disclosure, it will be noted that the orientation or positional relationships indicated by the terms "upper", "lower", "left", "right" and the like are defined based on the drawing orientation shown in the accompanying drawings. These terms are only used to facilitate the description of the present disclosure and simplify the description, rather than indicating or implying that the referred device or element must have a specific orientation, as well as a specific orientation configuration and operation. Therefore, they shall not be construed as limitations to the present disclosure. The terms "inner" and "outer" refer to the inside and outside of the contour of the corresponding structure. The length direction refers to the length direction of the track (the first track or the second track 2), for example, which may be the length direction of the vehicle. The width direction refers to the width direction of the track (the first track or the second track 2), for example, which may be the width direction of the vehicle. In addition, terms such as "first", "second" and the like are used to distinguish one element from another, without sequence and importance.

In the description of the present disclosure, it will also be noted that, unless otherwise expressly specified and limited, the terms "disposed", "connected", "coupled" and "mounted" shall be interpreted broadly. For example, the connection may be a fixed connection, a detachable connection, or an integral connection; it may be a direct connection, or an indirect connection via an intermediate medium. For those of ordinary skill in the art, the specific meanings of the above terms in the present disclosure can be understood according to the actual situation.

In the present disclosure, the peel strength of the track structure 100 refers to the magnitude of the force required to apply a force on the upper track so that the upper track tends to disengage from the lower track, and the lower track deforms under the force until the upper track disengages from the lower track.

As mentioned above, the peel strength of the seat track in the related art is low. Research has found that the reason for the low peel strength of the seat track in the related art lies in that: in the related art, the plane of the upper track in contact with the balls at the upper side is a horizontal plane, and the force that the lower track can bear in the vertical direction is small, which causes the upper track to easily disengage from the lower track or easily leads to deformation of the track, resulting in low peel strength of the track.

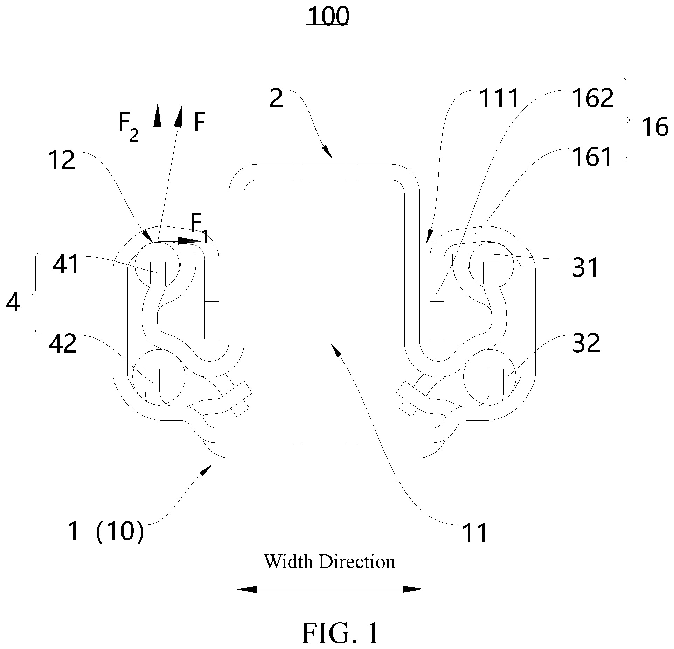

In view of this, according to a first aspect of the present disclosure, as shown in Figs. 1 to 7, a track 1 is provided. The track 1 is adapted to serve as a first track of the track structure 100. A cavity 11 with an opening 111 is formed on the track 1, and the track 1 is further provided with a stop surface 12. The stop surface 12 is configured to stop a first rolling element 31 of the track structure 100, wherein the first rolling element 31 is a rolling element disposed in the cavity 11 and close to one side of the opening 111. The stop surface 12 is configured to be capable of contacting the first rolling element 31, and the stop surface 12 has at least a first point 311 for contacting the first rolling element 31. The first point 311 is adapted to be disposed on a side close to the opening 111 relative to a second point 312 (the upper side in the drawing orientation of the cavity 11 as shown in Fig. 1), wherein the second point 312 is the highest point of the first rolling element 31, and the height of the first point 311 is adapted to be lower than the height of the second point 312. In other words, the stop surface 12 can have an abutment vertex located lower than the second point 312, and when the abutment vertex abuts against the first rolling element 31, the force acting on the position of the abutment vertex forms an angle with the height direction of the slide track (the up-down direction in the drawing orientation of Fig. 1).

Here, it should be noted that when the track 1 serves as the first track of the track structure 100, the second track 2 of the track structure 100 can be assembled on the track 1 via the opening 111 of the cavity 11. Since the first rolling element 31 is disposed between the track 1 and the second track 2 and close to one side of the opening 111 of the cavity 11, the track 1 can support the second track 2 through the first rolling element 31, and a sliding fit can be formed between the second track 2 and the track 1, so that the second track 2 can slide along the length direction of the track 1.

Moreover, since the track 1 includes the stop surface 12, and the stop surface 12 can be in contact with the first rolling element 31, when the second track 2 is subjected to an external force that tends to make the second track 2 disengage from the track 1 (such as the external force F in Fig. 1), the first rolling element 31 will press against the stop surface 12 of the track 1 under the action of the external force. At least at the position of the first point 311, the external force exerted by the first rolling element 31 on the track 1 also has a certain inclination angle. According to the principle of force resolution, the above external force acting on the track 1 can be decomposed into a first component force (F1 in Fig. 1) and a second component force (F2 in Fig. 1). The first component force acts on the track 1 along the width direction of the track 1, and the second component force acts on the track 1 along the direction in which the second track 2 peels off the track 1 (i.e., the height direction of the track 1 or the second track 2, namely the up-down direction in the drawing orientation of Fig. 1). According to the parallelogram law of forces, the second component force F2 exerted by the first rolling element 31 on the track 1 is smaller than the external force F.

Based on this, the stop surface 12 can reduce the force borne by the track 1 in the peeling direction of the second track 2, effectively avoiding the deformation of the track 1 caused by excessive force on the track 1 in the vertical direction, which leads to the disengagement of the second track 2 from the track 1, and improving the peel strength of the track structure 100.

In summary, when the track 1 serves as the first track of the track structure 100, the peel strength of the track structure 100 can be directly improved by using the stop surface 12, and the peel strength of the track structure 100 can be improved without using other reinforcing members. While improving the peel strength of the track structure 100, it is conducive to reducing the number of components in the track structure 100, simplifying the track structure 100, and effectively saving the production and manufacturing costs caused by the use of other reinforcing members.

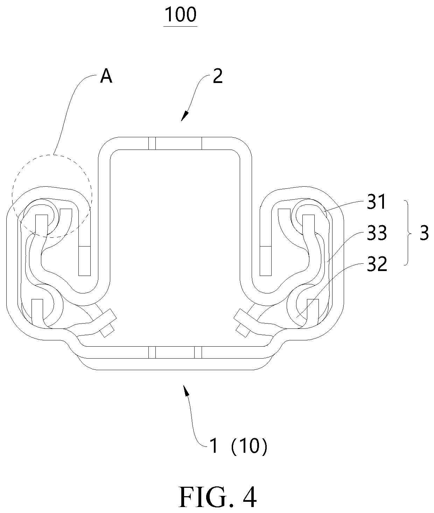

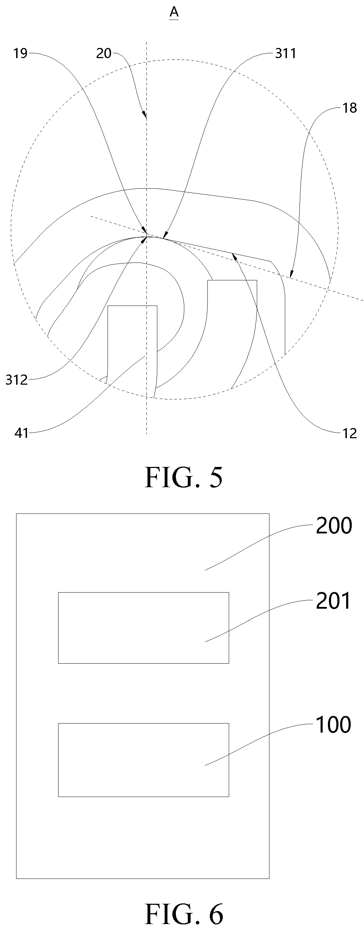

The present disclosure does not limit the specific shape of the stop surface 12. In an embodiment of the present disclosure, as shown in Figs. 4 and 5, the stop surface 12 has a tangent line 18 at the first point 311, and the height of the intersection point 19 of the tangent line 18 and the perpendicular line 20 where the second point 312 is located is higher than that of the first point 311. In this way, it is ensured that the stop surface 12 can always have a position adapted to abut against the first rolling element 31 in an inclined manner.

In an embodiment, the stop surface 12 may be a plane or a curved surface, as long as the stop surface 12 can have the above-mentioned first point 311, so as to improve the peel strength of the track structure 100.

In an embodiment of the present disclosure, the above-mentioned stop surface 12 is configured as an inclined plane. The stop surface 12 has a first end 121 and a second end 122 opposite to each other. In the width direction of the track 1, the second end 122 is closer to the opening 111 than the first end 121, and the second end 122 is closer to the side of the cavity 11 away from the opening 111 than the first end 121. Specifically, the included angle α between the stop surface 12 and the width direction of the track 1 is 5° to 10°. Since the second end 122 of the stop surface 12 is closer to the opening 111 than the first end 121, and the second end 122 is closer to the side of the cavity 11 away from the opening 111 than the first end 121, that is to say, the second end 122 of the stop surface 12 inclines downward (i.e., along the up-down direction in the drawing orientation of Fig. 1), that is, the height of the second end 122 of the stop surface 12 is lower than that of the first end 121. Moreover, since the included angle α between the stop surface 12 and the width direction of the track 1 is greater than or equal to 5°, the force F exerted by the first rolling element 31 and/or the second track 2 on the track 1 has a certain inclination angle, which can reduce the force borne by the track 1 in the vertical direction, and effectively avoid the situation that the peel strength of the track structure 100 is not significantly improved due to the small inclination angle of the stop surface 12.

Moreover, since the included angle α between the stop surface 12 and the width direction of the track 1 is less than or equal to 10°, the inclination angle of the stop surface 12 will not be excessively large, which effectively avoids mechanical interference between the track 1 and the second track 2 caused by an excessively large inclination angle of the stop surface 12, resulting in the failure of the second track 2 to slide on the track 1.

To reduce the friction force between the first rolling element 31 and the track 1, in an embodiment, the track 1 is further provided with a first arc-shaped surface 13 for contacting the first rolling element 31. The shape of the first arc-shaped surface 13 matches the shape of the first rolling element 31, and the first arc-shaped surface 13 is connected to an end of the stop surface 12 away from the opening 111. Since the shape of the first arc-shaped surface 13 matches the shape of the first rolling element 31, when the second track 2 slides on the track 1, the first rolling element 31 can roll on the track 1, and rolling contact can be formed between the first rolling element 31 and the track 1. The friction force between the first rolling element 31 and the track 1 is small, which effectively avoids the situation that the first rolling element 31 and/or the track 1 are easily worn due to a large friction force between the first rolling element 31 and the track 1, and improves the service life of the first rolling element 31 and/or the track 1.

In addition, since the first arc-shaped surface 13 is connected to the end of the stop surface 12 away from the opening 111, when the first rolling element 31 presses against the track 1, it can be ensured that the force from the first rolling element 31 can act on the inclined stop surface 12 and be decomposed into a first component force acting on the track 1 along the width direction of the track 1 (F1 in Fig. 1) and a second component force acting on the track 1 along the direction in which the second track 2 peels off the track 1 (F2 in Fig. 1). This can reduce the force acting on the track 1 along the direction in which the second track 2 peels off the track 1, thereby improving the peel strength of the track structure.

Here, the present disclosure does not limit the specific shape of the first arc-shaped surface 13. In an embodiment of the present disclosure, the above-mentioned first arc-shaped surface 13 may be configured as a first circular arc-shaped surface.

To ensure that the track 1 and the second track 2 can form a sliding fit, in an embodiment, the number of the first rolling elements 31 may be multiple, and the multiple first rolling elements 31 are disposed at intervals along the length direction of the track 1.

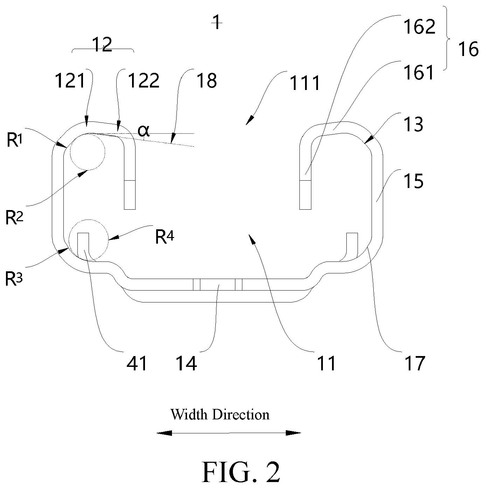

The present disclosure does not limit the specific structure of the track 1, as long as the second track 2 can slide on the track 1 along the length direction of the track 1. In an embodiment of the present disclosure, as shown in Figs. 1 and 2, the track 1 includes a first main body portion 14, a pair of first side wall portions 15 and a pair of stop portions 16. One ends of the pair of first side wall portions 15 are respectively disposed at two ends of the first main body portion 14 in the width direction of the track 1, and the pair of stop portions 16 are connected to the other ends of the corresponding first side wall portions 15. The first main body portion 14, the first side wall portions 15 and the stop portions 16 jointly define the cavity 11, and a gap between the pair of stop portions 16 forms the opening 111. Specifically, the stop portion 16 includes at least a first portion 161 arranged in an inclined manner, a first end of the first portion 161 is connected to the first side wall portion 15, and a second end of the first portion 161 extends along a direction close to the first main body portion 14. The inner wall of the first portion 161 is provided with the stop surface 12. That is to say, the track 1 is symmetrical along its own width direction, and its shape is roughly in a " 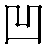 " shape. The inner surface of the inclined first portion 161 of the stop portion 16 is formed as the stop surface 12, and the pair of first side wall portions 15 are respectively disposed at two sides of the first main body portion 14 and connected to the first main body portion 14.

In the above-mentioned track 1, it can be understood that the included angle between the first side wall portion 15 and the first main body portion 14 may be any angle greater than 0° and less than 180°. In an embodiment of the present disclosure, as shown in Fig. 2, the two first side wall portions 15 may extend along a direction perpendicular to the first main body portion 14.

In an embodiment, as shown in Figs. 1 and 2, a position where the first side wall portion 15 is connected to the first portion 161 is in smooth transition, so as to form the first arc-shaped surface 13 adapted to contact the first rolling element 31.

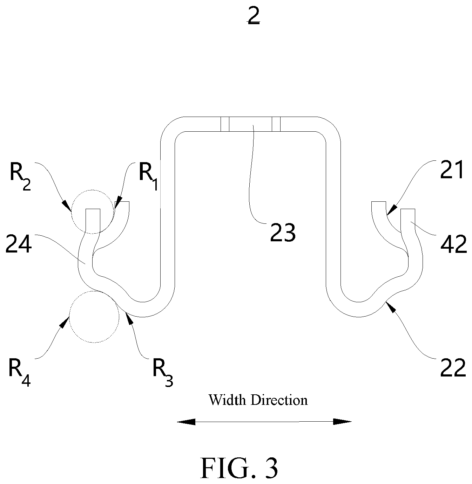

To further improve the peel strength of the track structure 100, in an embodiment, as shown in Fig. 3, the stop portion 16 may further include a second portion 162. The second portion 162 is connected to the second end of the first portion 161 and extends close to the first main body portion 14 in a direction perpendicular to the first main body portion 14. In this way, the first portion 161 and the second portion 162 of the stop portion 16 can form an L-shaped structure, and parts of the first rolling element 31 and the second track 2 can be limited in the "n"-shaped space enclosed by the stop portion 16 and the first side wall portion 15.

To prevent the first rolling element 31 from disengaging from the track 1 or the second track 2, in an embodiment, as shown in Figs. 1 and 2, the track structure 100 further includes at least one pair of first limiting portions 41. The at least one pair of first limiting portions 41 includes a pair of first limiting portions 41 disposed at two ends of the second track 2 in the length direction, and the first limiting portions 41 are used for limiting the position of the first rolling element 31 in the length direction of the second track 2. In this way, the first limiting portion 41 can abut against the first rolling element 31, effectively avoiding the situation that the first rolling element 31 disengages from the track 1 or the second track 2 and the track structure 100 cannot be used normally.

According to a second aspect of the present disclosure, a track structure 100 is provided. The track structure 100 includes the track 1 as described above, a second track 2 and a first rolling element 31. The track 1 serves as a first track of the track structure, and at least part of the second track 2 (such as a part of the second side wall portion 24 hereinafter) is slidably disposed at the cavity 11 along the length direction of the track 1. The first rolling element 31 is disposed between the track 1 and the second track 2 and disposed on a side of the cavity 11 close to the opening 111. That is to say, the first rolling element 31 is clamped between the track 1 and the second track 2, and the second track 2 can reciprocate along the length direction of the track 1.

To reduce the friction force between the first rolling element 31 and the second track 2, in an embodiment, as shown in Figs. 1 and 2, the above-mentioned track 1 is provided with a first arc-shaped surface 13, and the shape of the first arc-shaped surface 13 matches the shape of the first rolling element 31. The second track 2 is further provided with a second arc-shaped surface 21 contacting the first rolling element 31, and the shape of the second arc-shaped surface 21 matches the shape of the first rolling element 31. The first rolling element 31 is clamped between the first arc-shaped surface 13 and the second arc-shaped surface 21. Since the shape of the second arc-shaped surface 21 matches the shape of the first rolling element 31, when the second track 2 slides on the track 1, the first rolling element 31 can roll on the second track 2, and rolling contact can be formed between the first rolling element 31 and the second track 2. The friction force between the first rolling element 31 and the second track 2 is small, which effectively avoids the situation that the first rolling element 31 and/or the second track 2 are easily worn due to a large friction force between the first rolling element 31 and the second track 2, and improves the service life of the first rolling element 31 and/or the second track 2.

In addition, since rolling contact is formed between the first rolling element 31 and both the track 1 and the second track 2, and the first rolling element 31 is clamped between the first arc-shaped surface 13 and the second arc-shaped surface 21, the first arc-shaped surface 13 and the second arc-shaped surface 21 can abut against the first rolling element 31. The position of the first rolling element 31 between the track 1 and the second track 2 is relatively stable, which effectively avoids the situation that the track 1 and/or the second track 2 are displaced or misaligned due to stress. At the same time, the friction force between the first rolling element 31 and the track 1 as well as the second track 2 is small, so that the sliding of the second track 2 on the track 1 is relatively smooth.

The present disclosure does not limit the specific shapes of the first arc-shaped surface 13 and the second arc-shaped surface 21. In an embodiment of the present disclosure, as shown in Figs. 1 and 2, both the first arc-shaped surface 13 and the second arc-shaped surface 21 are first circular arc-shaped surfaces.

Here, the present disclosure does not limit the specific shape of the first rolling element 31. In an embodiment, as shown in Figs. 1 and 2, the first rolling element 31 is a first ball. For the embodiment in which both the first arc-shaped surface 13 and the second arc-shaped surface 21 are first circular arc-shaped surfaces, since the first rolling element 31 is a first ball, reliable surface-to-surface contact can be formed between the first rolling element 31 and the first arc-shaped surface 13 as well as between the first rolling element 31 and the second arc-shaped surface 21, which increases the contact areas between the first rolling element 31 and the first arc-shaped surface 13 and between the first rolling element 31 and the second arc-shaped surface 21, thereby reducing the contact stress between the first rolling element 31 and the track 1 as well as the second track 2. This effectively avoids the situation that the first rolling element 31, the first arc-shaped surface 13 and the second arc-shaped surface 21 are easily worn due to point contact between the first rolling element 31 and the first arc-shaped surface 13 as well as the second arc-shaped surface 21 and high contact stress, and improves the service life and comfort of the track structure 100.

The present disclosure does not limit the radii of the first ball and the first circular arc-shaped surface. In an embodiment of the present disclosure, the radius of the first circular arc-shaped surface is greater than the radius of the first ball. In this way, when the first rolling element 31 rolls between the first arc-shaped surface 13 and the second arc-shaped surface 21, gaps can exist between the first rolling element 31 and the first arc-shaped surface 13 as well as between the first rolling element 31 and the second arc-shaped surface 21, and the first rolling element 31 can roll between the first arc-shaped surface 13 and the second arc-shaped surface 21, so that the first rolling element 31 can adjust its angle and/or position between the first arc-shaped surface 13 and the second arc-shaped surface 21.

In addition, the above gaps can also compensate for manufacturing and/or assembly errors of the track 1 and/or the second track 2, effectively avoiding the situation that the first rolling element 31 cannot roll between the track 1 and the second track 2 due to errors existing in the track 1 and/or the second track 2.

In an embodiment, the radius of the first circular arc-shaped surface is R1, the radius of the first ball is R2, and R1 and R2 satisfy R1 ≥ 1.2R2. In this way, the contact areas between the first arc-shaped surface 13, the second arc-shaped surface 21 and the first rolling element 31 are large.

To improve the load-bearing capacity and smoothness of movement of the track structure 100, as shown in Fig. 1, the track structure 100 may further include a second rolling element 32. The second rolling element 32 is disposed on a side of the cavity 11 away from the opening 111. The track 1 is further provided with a third arc-shaped surface 17, and the second track 2 is further provided with a fourth arc-shaped surface 22. The second rolling element 32 is clamped between the third arc-shaped surface 17 and the fourth arc-shaped surface 22. That is to say, the second rolling element 32 is disposed on a side of the first rolling element 31 away from the stop surface 12, and the first rolling element 31 and the second rolling element 32 are disposed at intervals in the vertical direction. Since the track structure 100 further includes the second rolling element 32, the second rolling element 32 can also bear the acting forces applied to the track 1 and the second track 2, which can increase the load-bearing capacity of the track structure 100 and, to a certain extent, improve the smoothness of movement of the second track 2 in the track 1.

Moreover, since the third arc-shaped surface 17 matches the shape of the second rolling element 32, when the second track 2 slides on the track 1, the second rolling element 32 can roll on the track 1 and the second track 2, and rolling contact can be formed between the second rolling element 32 and the track 1 as well as between the second rolling element 32 and the second track 2. The friction forces between the second rolling element 32 and the track 1 and between the second rolling element 32 and the second track 2 are small, so that the sliding of the second track 2 on the track 1 is relatively smooth. This effectively avoids the situation that the second rolling element 32, the track 1 and the second track 2 are easily worn due to large friction forces between the second rolling element 32 and the track 1 as well as the second track 2, and improves the service life of the second rolling element 32, the track 1 and the second track 2.

In addition, since rolling contact is formed between the second rolling element 32 and both the track 1 and the second track 2, and the second rolling element 32 is clamped between the third arc-shaped surface 17 and the fourth arc-shaped surface 22, the third arc-shaped surface 17 and the fourth arc-shaped surface 22 can abut against the second rolling element 32. The position of the second rolling element 32 between the track 1 and the second track 2 is relatively stable, which effectively avoids the situation that the track 1 and/or the second track 2 are displaced and/or misaligned under stress.

To further ensure that the track 1 and the second track 2 can form a sliding fit, in an embodiment, the number of the second rolling elements 32 may be multiple, and the multiple second rolling elements 32 are disposed at intervals along the length direction of the track 1.

Here, the present disclosure does not limit the specific structure of the second track 2, as long as the second track 2 can slide on the track 1 along the length direction of the track 1. In an embodiment of the present disclosure, as shown in Figs. 1 and 3, the second track 2 includes a second main body portion 23 and a pair of second side wall portions 24, wherein one ends of the pair of second side wall portions 24 are respectively disposed at two ends of the second main body portion 23 in the width direction of the second track 2. The second arc-shaped surface 21 is disposed at an end of the second side wall portion 24 away from the first main body portion 14, and the fourth arc-shaped surface 22 is disposed at an end of the second side wall portion 24 close to the first main body portion 14. That is to say, the second track 2 is symmetrical along its own width direction, and its shape can be roughly in a " 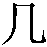 "-shape. One end of the second side wall portion 24 is bent to form the second arc-shaped surface 21, and the other end of the second side wall portion 24 is bent to form the fourth arc-shaped surface 22.

Specifically, as shown in Fig. 1, for the embodiment in which the second track 2 is slidably disposed at the cavity 11 along the length direction of the track 1, a part of the second side wall portion 24 away from the first main body portion 14 may be disposed in the above-mentioned "n"-shaped space defined by the first side wall portion 15 and the stop portion 16, and the second main body portion 23 of the second track 2 may be exposed from the above-mentioned opening 111.

The present disclosure does not limit the specific shapes of the third arc-shaped surface 17 and the fourth arc-shaped surface 22. In an embodiment of the present disclosure, as shown in Figs. 1 and 3, optionally, both the third arc-shaped surface 17 and the fourth arc-shaped surface 22 are second circular arc-shaped surfaces, and the second rolling element 32 is a second ball. In this way, reliable surface-to-surface contact can be formed between the second rolling element 32 and the third arc-shaped surface 17 as well as between the second rolling element 32 and the fourth arc-shaped surface 22, which increases the contact areas between the second rolling element 32 and the third arc-shaped surface 17 and between the second rolling element 32 and the fourth arc-shaped surface 22, reduces the contact stress between the second rolling element 32 and the track 1 and/or the second track 2, and effectively avoids the situation that the second rolling element 32, the third arc-shaped surface 17 and the fourth arc-shaped surface 22 are easily worn due to point contact between the second rolling element 32 and the third arc-shaped surface 17 as well as the fourth arc-shaped surface 22 and high contact stress, thereby improving the service life and comfort of the track structure 100.

To reduce the friction force between the second rolling element 32 and the track 1, in an embodiment, as shown in Figs. 1 and 2, the track 1 is further provided with a third arc-shaped surface 17 adapted to contact the second rolling element 32 in the track structure. The third arc-shaped surface 17 is disposed on a side of the cavity 11 away from the opening 111, and the third arc-shaped surface 17 matches the shape of the second rolling element 32, wherein the second rolling element 32 is a rolling element disposed on a side of the cavity 11 away from the opening 111. Since the third arc-shaped surface 17 matches the shape of the second rolling element 32, when the second track 2 slides on the track 1, the second rolling element 32 can roll on the track 1, and rolling contact can be formed between the second rolling element 31 and the track 1. The friction force between the second rolling element 31 and the track 1 is small, which effectively avoids the situation that the second rolling element 31 and/or the track 1 are easily worn due to a large friction force between the second rolling element 31 and the track 1, and improves the service life of the second rolling element 31 and/or the track 1.

Here, the present disclosure does not limit the radii of the second ball and the second arc-shaped surface 21. In an embodiment of the present disclosure, the radius of the second circular arc-shaped surface is greater than the radius of the second ball. In this way, when the second rolling element 32 rolls between the third arc-shaped surface 17 and the fourth arc-shaped surface 22, gaps can exist between the second rolling element 32 and the third arc-shaped surface 17 as well as between the second rolling element 32 and the fourth arc-shaped surface 22, and the second rolling element 32 can roll between the third arc-shaped surface 17 and the fourth arc-shaped surface 22, so that the second rolling element 32 can adjust its angle and/or position between the third arc-shaped surface 17 and the fourth arc-shaped surface 22.

In addition, the above gaps can also compensate for manufacturing errors of the track 1 and/or the second track 2, effectively avoiding the situation that the second rolling element 32 cannot roll between the track 1 and the second track 2 due to errors existing in the track 1 and/or the second track 2.

In an embodiment, the radius of the second circular arc-shaped surface is R3, the radius of the second ball is R4, and R3 and R4 satisfy R3 ≥ 1.2R4.

The present disclosure does not limit the radius of the first ball and the radius of the second ball. The radius of the first ball may be equal to or different from the radius of the second ball, as long as the first ball and the second ball can enable the second track 2 to slide on the track 1. In an embodiment of the present disclosure, the radius of the second ball is greater than the radius of the first ball. In this way, the second ball can bear a larger load, further improving the load-bearing capacity of the track structure 100.

To prevent the second rolling element 32 from disengaging from the track 1 or the second track 2, in an embodiment, as shown in Figs. 1 and 3, the track structure 100 further includes at least one pair of second limiting portions 42. The at least one pair of second limiting portions 42 includes a pair of second limiting portions 42 disposed at two ends of the second track 2 in the length direction, and the second limiting portions 42 are used for limiting the position of the second rolling element 32 in the length direction of the second track 2. In this way, the second limiting portion 42 can abut against the second rolling element 31, effectively avoiding the situation that the second rolling element 32 disengages from the track 1 or the second track 2 and the track structure 100 cannot be used normally.

Moreover, when the second track 2 slides on the track 1 to an extreme position along the length direction of the track 1, the first limiting portion 41 disposed on the track 1 and the second limiting portion 42 disposed on the second track 2 can abut against the rolling assembly 3 (see below) at the same time, so that the second track 2 cannot slide on the track 1 any further, and the second track 2 will not disengage from the track 1 along the length direction of the track 1.

In the present disclosure, as shown in Fig. 4, the track structure 100 may further include a rolling element retainer 33, and the first rolling element 31 and the second rolling element 32 are respectively mounted at two ends of the rolling element retainer 33.

Specifically, the rolling element retainer 33, together with the first rolling element 31 and the second rolling element 32, can jointly form the above-mentioned rolling assembly 3.

According to a third aspect of the present disclosure, as shown in Fig. 6, a seat assembly 200 is provided, including a seat 201 and the track structure 100 as described above, and the seat 201 is mounted on the track structure 100.

During installation, the track 1 can be mounted on a base plate for mounting the track structure 100, the seat 201 can be mounted on the second track 2, the second track 2 is fixedly connected to the bottom surface of the seat 201, and the second track 2 can drive the seat 201 to slide on the track 1, so as to realize the position adjustment of the seat 201.

In addition, since the peel strength of the above-mentioned track structure 100 is high, and the seat 201 is mounted on the track structure 100, the overall peel strength of the seat 201 is high.

Here, it should be noted that in the present disclosure, the application object of the track structure 100 is not limited, and it can be any equipment suitable for adopting the track structure 100. For example, the track structure 100 can be used for a vehicle 1000, and can also be used for other equipment suitable for adopting the above-mentioned track structure 100.

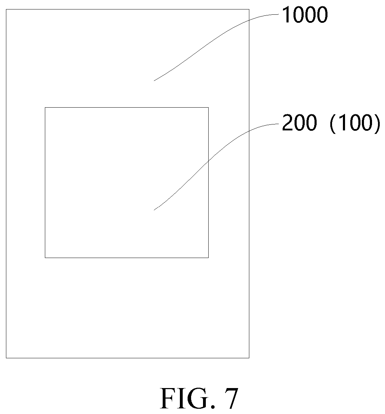

According to a fourth aspect of the present disclosure, as shown in Fig. 7, a vehicle 1000 is provided, including the seat assembly 200 as described above or the track structure 100 as described above.

Here, it can be understood that the track structure 100 can be a track of the seat 201 of the vehicle 1000, and can also be other components on the vehicle 1000 to which the above-mentioned track structure 100 can be applied.

The preferred embodiments of the present disclosure have been described in detail above with reference to the accompanying drawings. However, the present disclosure is not limited to the specific details in the above-mentioned embodiments. Within the scope of the technical concept of the present disclosure, various simple variations can be made to the technical solution of the present disclosure, and these simple variations all belong to the scope of protection of the present disclosure.

In addition, it will be noted that the various specific technical features described in the above-mentioned specific embodiments can be combined in any suitable manner without contradiction. In order to avoid unnecessary repetition, the present disclosure will not describe various possible combinations separately.

In addition, any combination can be made between the various different embodiments of the present disclosure, and as long as it does not go against the idea of the present disclosure, it will also be regarded as the content disclosed by the present disclosure.

## Claims

1. A track (1), the track (1) being adapted to serve as a first track of a track structure (100), the track (1) being provided with a cavity (11) with an opening (111);
the track (1) being further provided with a stop surface (12), the stop surface (12) being configured to stop a first rolling element (31) of the track structure (100), wherein the first rolling element (31) being a rolling element disposed in the cavity (11) and close to a side of the opening (111);
the stop surface (12) being configured to be capable of contacting the first rolling element (31), the stop surface (12) having at least a first point (311), the first point (311) being configured to contact the first rolling element (31), the first point (311) being adapted to be disposed on a side close to the opening (111) relative to a second point (312);
wherein the second point (312) being a highest point of the first rolling element (31), a height of the first point (311) being adapted to be lower than a height of the second point (312).

2. The track (1) according to claim 1, wherein the stop surface (12) has a tangent line (18) at the first point (311), the height of an intersection point (19) of the tangent line (18) and a perpendicular line (20) where the second point (312) is located is higher than the first point (311).

3. The track (1) according to claim 1 or 2, wherein the stop surface (12) is configured as an inclined plane, the stop surface (12) is provided with a first end (121) and a second end (122) opposite to each other, in a width direction of the track (1), the second end (122) is closer to the opening (111) than the first end (121), and the second end (122) is closer to a side of the cavity (11) away from the opening (111) than the first end (121);
wherein an included angle α between the stop surface (12) and the width direction of the track (1) is 5° to 10°.

4. The track (1) according to any one of claims 1 to 3, the track (1) further comprising a first arc-shaped surface (13), the first arc-shaped surface (13) being configured to contact the first rolling element (31), a shape of the first arc-shaped surface (13) matching a shape of the first rolling element (31);
the first arc-shaped surface (13) being connected to the end of the stop surface (12) away from the opening (111).

5. The track (1) according to claim 4, wherein the first arc-shaped surface (13) is configured as a first circular arc-shaped surface.

6. The track (1) according to any one of claims 1 to 5, the track (1) comprising a first main body portion (14), a pair of first side wall portions (15) and a pair of stop portions (16),
one end of the pair of first side wall portions (15) being respectively disposed at two ends of the first main body portion (14) in a width direction of the track (1), the pair of stop portions (16) being connected to the other end of the corresponding first side wall portion (15);
the first main body portion (14), the first side wall portion (15) and the stop portion (16) jointly defining the cavity (11), a gap between the pair of stop portions (16) forms the opening (111);
wherein the stop portion (16) comprises at least a first portion (161) arranged obliquely, a first end of the first portion (161) is connected to the first side wall portion (15), a second end of the first portion (161) extends along a direction close to the first main body portion (14);
an inner wall of the first portion (161) is provided with the stop surface (12).

7. The track (1) according to claim 6, wherein a position where the first side wall portion (15) is connected to the first portion (161) is in smooth transition to form a first arc-shaped surface (13) adapted to contact the first rolling element (31).

8. The track (1) according to claim 6 or 7, wherein the stop portion (16) further comprises a second portion (162), the second portion (162) is connected to the second end of the first portion (161), and extends toward the first main body portion (14) in a direction perpendicular to the first main body portion (14).

9. The track (1) according to any one of claims 1 to 8, the track (1) further comprising a third arc-shaped surface (17), the third arc-shaped surface (17) being configured to contact a second rolling element (32) in a track structure (100), the third arc-shaped surface (17) being disposed on a side of the cavity (11) away from the opening (111), the third arc-shaped surface (17) matching a shape of the second rolling element (32);
wherein the second rolling element (32) is a rolling element disposed on a side of the cavity (11) away from the opening (111).

10. The track (1) according to claim 9, the track (1) further comprising at least one pair of first limiting portions (41), the at least one pair of first limiting portions (41) comprising a pair of first limiting portions (41) disposed at two ends of the track (1) in a length direction, the first limiting portion (41) being configured to limit a position of the first rolling element (31) in the length direction of the track (1).

11. A track structure (100), the track structure (100) comprising the track (1) according to any one of claims 1 to 10, the track (1) being configured to serve as a first track of the track structure (100);
a second track (2), at least part of the second track (2) being slidably disposed at the cavity (11) along a length direction of the track (1); and
the first rolling element (31), disposed between the track (1) and the second track (2), and disposed on a side of the cavity (11) close to the opening (111).

12. The track structure (100) according to claim 11, wherein the track (1) comprises a first arc-shaped surface (13), a shape of the first arc-shaped surface (13) matches a shape of the first rolling element (31);
the second track (2) further comprises a second arc-shaped surface (21) contacting the first rolling element (31), a shape of the second arc-shaped surface (21) matches the shape of the first rolling element (31);
the first rolling element (31) is clamped between the first arc-shaped surface (13) and the second arc-shaped surface (21).

13. The track structure (100) according to claim 12, wherein the first arc-shaped surface (13) and the second arc-shaped surface (21) are both first circular arc-shaped surfaces.

14. The track structure (100) according to claim 13, wherein the first rolling element (31) is a first ball, a radius of the first circular arc-shaped surface is R1, a radius of the first ball is R2, the R1 and the R2 satisfy R1 ≥ 1.2R2.

15. The track structure (100) according to any one of claims 11 to 14, the track structure (100) further comprising a second rolling element (32), the second rolling element (32) is disposed on a side of the cavity (11) away from the opening (111);
the track (1) further comprises a third arc-shaped surface (17);
the second track (2) further comprises a fourth arc-shaped surface (22);
the second rolling element (32) is clamped between the third arc-shaped surface (17) and the fourth arc-shaped surface (22).

16. The track structure (100) according to claim 15, wherein the third arc-shaped surface (17) and the fourth arc-shaped surface (22) are both second circular arc-shaped surfaces, the first rolling element (31) is a first ball, the second rolling element (32) is a second ball;
a radius of the second ball is greater than a radius of the first ball.

17. The track structure (100) according to claim 16, wherein a radius of the second circular arc-shaped surface is R3, a radius of the second ball is R4, the R3 and the R4 satisfy R3 ≥ 1.2R4.

18. The track structure (100) according to any one of claims 15 to 17, wherein the second track (2) further comprises at least one pair of second limiting portions (42);
the at least one pair of second limiting portions (42) comprises a pair of second limiting portions (42) disposed at two ends of the second track (2) in a length direction;
the second limiting portion (42) is configured to limit a position of the second rolling element (32) in the length direction of the second track (2).

19. A seat assembly (200), comprising a seat (201) and the track structure (100) according to any one of claims 11 to 18.

20. A vehicle (1000), comprising the seat assembly (200) according to claim 19 or the track structure (100) according to any one of claims 11 to 18.
